# FASCICULE DE BREVET EUROPEEN

(11) **EP 0 849 195 B1**
(45) Date de publication et mention de la délivrance du brevet: **10.10.2001**
(21) Numéro de dépôt: 96870160.7
(22) Date de dépôt: 20.12.1996
(51) Int. Cl.: B65G 39/07, F16D 69/02

(54) **Garniture pour tambour d'entraînement ou de renvoi d'une bande transporteuse**
Belag für eine Förderbandtreibwalze
Conveyor belt driving drum lining

(43) Date de publication de la demande: 24.06.1998
(73) Titulaire: Technic Gum, S.A., 7060 Soignies (BE); M.I.C.K.E. Brühmann GmbH & Co. KG, 47057 Duisburg (DE)
(72) Inventeur: Brühmann, Wolfgang Friedrich Wilhelm, 42799 Leichlingen (DE); Davidts, Emmanuel, 7190 Ecaussinnes (BE)
(74) Mandataire: Pieraerts, Jacques

(56) Documents cités:
- EP-A- 0 239 660
- DE-A- 2 930 186
- FR-A- 2 231 693
- FR-A- 2 298 732
- US-A- 1 330 988
- US-A- 2 867 125
- DATABASE WPI Section Ch, Week 8815 Derwent Publications Ltd., London, GB; Class A12, AN 88-103130 XP002030421 & JP 63 054 456 A (KAWAJU KOJI KK) , 8 Mars 1988
- DATABASE WPI Section Ch, Week 8636 Derwent Publications Ltd., London, GB; Class A83, AN 86-236293 XP002030422 & JP 61 166 710 A (FUJIYOSHI K) , 28 Juillet 1986
- PATENT ABSTRACTS OF JAPAN vol. 012, no. 018 (M-660), 20 Janvier 1988 & JP 62 177359 A (ISHIZAKIGUMI:KK), 4 Août 1987,

## Description

La présente invention concerne une garniture pour tambour d'entraînement ou de renvoi d'une bande transporteuse telle qu'indiquée dans le préambule de la revendication 1.

Le but de l'invention est de réaliser une garniture dont la résistance à l'usure et le coefficient de friction sont considérablement augmentés par rapport à ce qui existe en faisant appel à des moyens techniques fiables et aisément contrôlables.

Pour réaliser cet objectif conformément à l'invention, la garniture pour tambours d'entraînement et poulies de renvoi est constituée d'une matière élastique à base de caoutchouc naturel ou synthétique ou d'un polyuréthanne ou son équivalent technique dans laquelle ont été incorporées des particules céramiques dont les dimensions se situent entre environ 10 et environ 2000 microns, une telle garniture est décrite par exemple dans US-A-2 867 125.

Dans la présente invention, les particules céramiques sont entourées d'un liant de type Epoxy.

En effet, des résultats étonnants ont été obtenus en faisant usage de particules enrobées dans un liant du type EP.

D'autres formes de réalisation de l'invention sont indiquées dans les revendications annexées.

D'autres détails et avantages de l'invention résulteront de la description qui sera donnée ci-après d'une garniture pour tambour d'entraînement ou de renvoi selon l'invention. Cette description n'est donnée qu'à titre d'exemple et ne limite pas l'invention. Les notations de référence se rapportent aux figures ci-jointes.

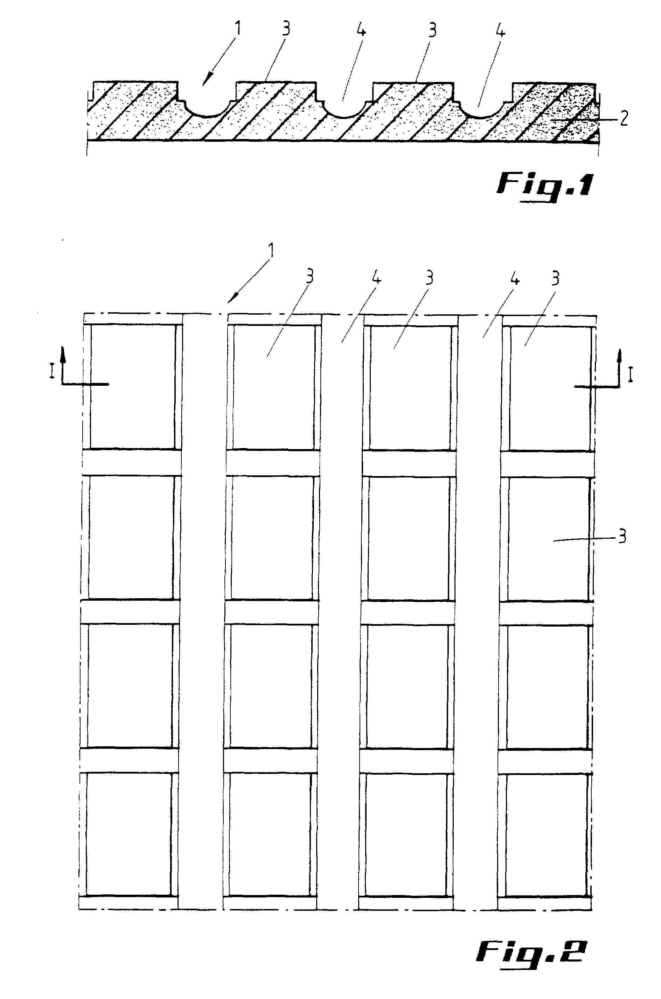

La figure 1 est une vue en coupe selon la ligne I-I de la figure 2.

La figure 2 est une vue en plan d'une garniture ou partie de garniture selon l'invention.

Comme il résulte de ces figures, la garniture 1 est constituée dans son entièreté d'une matière élastique 2 dans laquelle ont été incorporées des particules céramiques dont les caractéristiques seront décrites ci-après. Ces particules céramiques dont les dimensions extrêmement réduites ne permettent guère la reproduction, occupent la totalité de la matière élastique constituant la garniture.

Cette garniture présente, dans une forme d'exécution préférentielle une surface plane au-dessus de laquelle des protubérances 3 font saillie. La forme de ces protubérances est absolument facultative, mais d'excellents résultats ont été obtenus en réalisant ces protubérances sous la forme de rectangle.

Entre ceux-ci subsistent des canaux d'évacuation d'eau 4. Ces canaux 4 qui s'étendent entre les protubérances 3 permettent une évacuation rapide de l'eau lorsque la bande transporteuse et le tambour travaille soit dans l'eau, soit dans des conditions qui provoquent l'accumulation d'eau entre la bande et le tambour.

D'autres configurations géométriques de ces canaux sont évidemment possibles.

Une description de la composition de la matière élastique dans laquelle sont réparties des particules de céramique est donnée ci-après.

L'augmentation du coefficient de friction dû à l'incorporation des particules céramiques dont la nature abrasive et la dureté atteignent la valeur 9 dans l'échelle de Moh's ne provoque aucune augmentation de l'usure de la bande transporteuse avec laquelle elle est en contact. Ce résultat est dû à une association de particules à haute résistance à l'abrasion, noyées dans la masse élastomérique, apportant un haut coefficient de friction et une élasticité permettant un bon contact entre la bande transporteuse et le revêtement avec comme finalité une résistance à l'abrasion supérieure et une bonne adhérence entre la bande et le revêtement. Il est également dû à la géométrie des particules de céramique dont les dimensions sont données ci-après à titre d'exemple.

Un premier type de particules céramiques se présente sous la forme de grains à bords arrondis dont les dimensions se situent entre 500 et 1000 *µ*.

Un autre type de particules céramiques se présente sous la forme d'aiguilles à bords vifs. Ces particules ont des dimensions situées entre 100 et 500*µ* et le rapport diamètre/longueur de ces particules en forme d'aiguilles est de 1:5.

Le dernier type se présente sous la forme d'une poudre dont les dimensions des particules sont beaucoup plus réduites et se situent entre 10 et 100 *µ*.

Les particules en forme d'aiguilles qui sont de dimensions plus grandes sont capables de s'ancrer elles-mêmes dans la matière élastique et ne risquent pas d'en être arrachées principalement lorsque la bande transporteuse passe sur le tambour.

Les particules céramiques en forme d'aiguilles à angles vifs forment dans la matière caoutchouteuse un réseau tridimensionnel, les autres particules céramiques qui se présentent sous la forme de grains arrondis ou sous la forme d'une poudre sont distribuées au hasard dans la matière élastique. Comme le bord du volume du réseau est formé par les particules en forme d'aiguilles les particules poudreuses et les particules arrondies sont piégées à l'intérieur du réseau.

Les particules de plus grandes dimensions doivent avoir une dureté Moh plus faible que celle des particules de dimensions plus réduites parce que le caractère abrasif augmente avec les dimensions ce qui signifie qu'en choisissant le rapport approprié entre les divers éléments céramiques à l'intérieur de la masse céramique et le rapport approprié entre ces masses céramiques, il est possible d'influencer le degré de coefficient de friction et le degré d'usure de la garniture.

Une dernière et très importante fonction des particules céramiques dans une garniture selon la présente demande est la réduction de la tendance à offrir un coefficient de friction plus faible lorsqu'on travaille dans des conditions d'humidité (non pas lorsque la bande transporteuse et/ou le tambour sont mouillés).

Les particules, bien que noyées dans la matière élastique, génèrent une porosité en surface qui résulte de leur distribution dans la masse et de leur forme. C'est la raison pour laquelle le coefficient d'adhésion d'une garniture réalisée selon les normes de la présente demande de brevet offre un plus grand coefficient de friction et assure un meilleur rendement que lors de l'utilisation de garniture de divers types connus à ce jour.

Les avantages offerts par les garnitures qui viennent d'être décrites sont de toute évidence:
a) une diminution de l'usure en raison de l'incorporation homogène des particules céramiques incluant un liant EP capable d'améliorer l'adhérence de ces particules à la matière élastique.
   En général la présence d'un liant améliore la résistance à l'usure et augmente la dureté shore du caoutchouc en fonction de la quantité de liant. Le liant EP entoure toutes les particules céramiques et agit comme un adhésif additionnel améliorant l'adhérence quoique la matière élastique remplisse déjà ce rôle.
b) une augmentation du coefficient de friction comparé à celui d'une garniture conventionnelle et cela en raison de la nature abrasive et de la dureté des particules céramiques incorporées dans la matière élastique.

## Revendications

1. Garniture pour tambour d'entraînement ou de renvoi d'une bande transporteuse, constituée d'une matière élastique à base de caoutchouc naturel ou synthétique ou d'un polyuréthanne ou son équivalent technique dans laquelle ont été incorporées des particules céramiques dont les dimensions se situent entre environ 10 et environ 2000 microns, **caractérisée en ce que** les particules céramiques sont entourées d'un liant de type Epoxy.

2. Garniture selon la revendication 1, **caractérisée en ce que** les particules précitées ont la forme de grains à angles arrondis dont les dimensions se situent entre environ 500 et environ 1000 µ.

3. Garniture selon la revendication 1, **caractérisée en ce que** les particules précitées ont la forme d'anguilles à angles vifs dont les dimensions se situent entre environ 1000 et environ 2000 µ.

4. Garniture selon la revendication 1, **caractérisée en ce que** les particules céramiques se présentent sous la forme d'une poudre dont les constituants présentent des dimensions entre environ 10 et environ 100 µ.

5. Garniture selon l'une des revendications 1 - 4, **caractérisée en ce que** les particules céramiques incorporées dans la matière élastique sont un mélange des types répondant aux normes selon les revendications 2 à 4.

6. Garniture selon l'une des revendications 1 - 5, **caractérisée en ce qu'**elle présente des protubérances 3 placées en alignement entre lesquelles sont prévus des canaux d'évacuation de l'eau 4.

7. Garniture selon la revendication 6, **caractérisée en ce que** les canaux précités présentent un fond en arc de cercle.

## Patentansprüche

1. Bezug für eine Treibwalze oder eine Zwischengetriebewalze eines Förderbands, aus einem elastischen Material auf der Basis von natürlichem oder künstlichem Gummi oder von Polyurethan oder seinem technischen Äquivalent, in welches Keramikpartikel eingebettet worden sind, deren Abmaße zwischen ungefähr 10 und ungefähr 2000 Mikrometern liegen, **dadurch gekennzeichnet, dass** die Keramikpartikel von einem Epoxy-Bindemittel umgeben sind.

2. Bezug nach Anspruch 1, **dadurch gekennzeichnet, dass** die vorgenannten Partikel die Form von Körnern mit abgerundeten Ecken haben, deren Abmaße zwischen ungefähr 500 und ungefähr 1000 µm liegen.

3. Bezug nach Anspruch 1, **dadurch gekennzeichnet, dass** die vorgenannten Partikel die Form von Nadeln mit spitzen Winkeln haben, deren Abmaße zwischen ungefähr 1000 und ungefähr 2000 µm liegen.

4. Bezug nach Anspruch 1, **dadurch gekennzeichnet, dass** die Keramikpartikel in Pulverform vorliegen, wobei die Bestandteile Abmaße zwischen ungefähr 10 und ungefähr 100 µm haben.

5. Bezug nach einem der Ansprüche 1 bis 4, **dadurch gekennzeichnet, dass** die Keramikpartikel, welche in dem elastischen Material eingebettet sind, eine Mischung der Partikel nach den Ansprüchen 2 bis 4 sind.

6. Bezug nach einem der Ansprüche 1 bis 5, **dadurch gekennzeichnet, dass** er Ausstülpungen (3) aufweist, welche aneinander ausgerichtet sind und zwischen welchen Wasserabführkanäle (4) vorgesehen sind.

7. Bezug nach Anspruch 6, **dadurch gekennzeichnet, dass** die vorgenannten Kanäle einen kreisbogenförmigen Boden aufweisen.

## Claims

1. A lining for a driving or return drum of a conveyor belt, comprising an elastic material based on natural or synthetic rubber or a polyurethane or its technical equivalent, in which are incorporated ceramic particles, the dimensions of which are between approximately 10 and approximately 2000 microns, **characterised in that** the ceramic particles are surrounded by a binder of epoxy type.

2. A lining according to claim 1, **characterised in that** said particles are in the form of grains with rounded angles, the dimensions of which are between approximately 500 and approximately 1000 µ.

3. A lining according to claim 1, **characterised in that** said particles are eel-shaped with sharp angles, the dimensions of which are between approximately 1000 and approximately 2000 µ.

4. A lining according to claim 1, **characterised in that** the ceramic particles are in powder form, the constituents of which have dimensions of between approximately 10 and approximately 100 µ.

5. A lining according to any one of claims 1 to 4, **characterised in that** the ceramic particles incorporated in the elastic material are a mixture of types conforming to the specifications according to claims 2 to 4.

6. A lining according to any one of claims 1 to 5, **characterised in that** it has projections (3) arranged in alignment, between which are provided water removal channels (4).

7. A lining according to claim 6, **characterised in that** said channels have a bottom of circular arc shape.
